# EUROPEAN PATENT APPLICATION

(11) **EP 3 214 864 A1**
(43) Date of publication of application: **06.09.2017**
(21) Application number: 15854485.8
(22) Date of filing: 07.04.2015
(51) Int. Cl.: H04W 24/00, H04W 36/00

(54) **NEIGHBOR CELL DETECTING METHOD, APPARATUS AND COMMUNICATION DEVICE**

(30) Priority: 31.10.2014 CN 201410606582
(71) Applicant: ZTE Corporation, Shenzhen, Guangdong 518057 (CN)
(72) Inventor: HUANG, He, Shenzhen Guangdong 518057 (CN)
(74) Representative: HGF Limited
(86) International application number: PCT/CN2015/075966
(87) International publication number: WO 2016/065845

(57) **Abstract**

According to a neighbor area detection method, apparatus and communication device, a detection message is acquired and time of acquiring the detection message is recorded by a neighbor area detection apparatus, herein the acquired detection message includes identification information of the client in an uplink message sent by the client through a wireless access point and identification information of the wireless access point; and then when the acquired detection message includes a plurality of messages, it is judged whether there are detection messages with different identification information of wireless access points but same identification information of clients and time difference of acquiring the detection message is less than a preset time difference threshold; if yes, areas covered by the wireless access points in the detection messages are configured to be neighbor areas.

## Description

### Technical Field

The present invention relates to the field of communications, and more particularly, to a neighbor area detection method, apparatus and communication device.

### Background

Wireless local network technology is currently widely applied, and the typical technology includes bluetooth technology and a wireless local network technology according to the IEEE 802.11 protocol. Wireless Local Area Network (WLAN), which follows the IEEE802.11 protocol, has been developed to generate 802.11a/b/g/n and other releases until now, these releases are all operating at the open frequency band around 2.4 GHz and 5 GHz. The initial release of the 802.11 standard was completed in 1997. The main idea of the initial release of the 802.11 standard comes from the Ethernet defined by the 802.3 protocol, so Medium Access Control (MAC) layer at 802.11 uses the same simple distributed access protocol as that of Ethernet, that is, Carrier Sense Multiple Access (CSMA). When using CSMA technology, multiple points in the network can independently determine the sending and receiving of data frames. Each point needs to monitor the medium at first before sending the data. When the medium is idle, the point may send the data; but when the medium is busy, the point needs to delay sending the data. If more than two points simultaneously monitor out that the medium is idle, and send the data simultaneously, there may be a conflict in the data receiver, resulting that the data sent by the two points interferes with each other, so that their data cannot be correctly demodulated by the receiver. Each point detects whether a collision has occurred, and in the event of a collision, the point where the collision occurs will be backed off for a random length of time and then will retransmit, and since the back off time is random, the probability of a re-collision can be reduced. For wired networks, a collision can be detected in nearly real time by electrical signals. For wireless networks, a collision is inferred by the condition that the acknowledgment (ACK) of the receiver or other form of response has not been obtained after the completion of sending of entire data. It can be seen that, in a wireless network using 802.11 technology, when one point starts to send data, the medium detected by other points within the point's wireless signal coverage range will all be in a busy state; and other points within the point's wireless signal coverage range will not send data again to avoid the collision; therefore, the point knows in advance that the other points which is a neighbor area relationship with it, and can negotiate the timing of sending data, which can reduce the probability of collision. For example, when a point A detects a signal from another point B, if point A and point B have not too much difference in transmission power, then when point A is sending a signal, point B should also be capable to detect the signal at point A. In this case, it can be said that there is an overlapped area between the coverage area of point A and the coverage area of point B, or the coverage area of point A and the coverage area of point B are adjacent. For another example, assuming that point A and point B can detect each other's signals, the coverage area of point A completely covers the coverage area of point B; point B and point C can also detect each other's signals, and even if point A and the point C cannot detect each other's signals, it can be inferred that there is an overlapped area between the power coverage range of point A and the power coverage range of point C, that is, at this moment, the areas covered by point A and point C are in an indirect neighbor area relationship. However, there is no accurate and effective detection scheme for this indirect neighbor area relationship.

### Summary

The document provides a neighbor area detection method, apparatus and communication device, to solve how to accurately and effectively detect the problem of indirect neighbor areas.

An embodiment of the present invention provides a neighbor area detection method, including:
a neighbor area detection apparatus acquiring a detection message and recording time of acquiring the detection message, herein the detection message includes identification information of a client in an uplink message sent by the client through a wireless access point and identification information of the wireless access point;
when acquired detection message includes a plurality of messages, the neighbor area detection apparatus judging whether there are detection messages with different identification information of wireless access points but same identification information of clients and time difference of acquiring the detection messages is less than a preset time difference threshold; if yes, configuring areas covered by the wireless access points in the detection messages to neighbor areas.

In an exemplary embodiment, the neighbor area detection apparatus is configured to connect with a plurality of wireless access points; and the neighbor area detection apparatus acquiring a detection message includes:
acquiring identification information of the client, which is extracted from the uplink message and sent by the wireless access point connected with the neighbor area detection apparatus, and acquiring identification information of the wireless access point;
or, acquiring the uplink message forwarded by a wireless access point connected with the neighbor area detection apparatus, extracting the identification information of the client from the uplink message, and acquiring the identification information of the wireless access point.

In an exemplary embodiment, the neighbor area detection apparatus is arranged at a wireless access point, and the neighbor area detection apparatus acquiring a detection message includes: acquiring a detection message of the wireless access point at which the neighbor area detection apparatus is located, and sending the detection message to a neighbor area detection apparatus at other wireless access point, and receiving a detection message sent by a neighbor area detection apparatus at other wireless access point;
the acquiring a detection message of the wireless access point at which the neighbor area detection apparatus is located includes:
acquiring identification information of the client, which is extracted from the uplink message and sent by the wireless access point at which the neighbor area detection apparatus is located, and acquiring the identification information of the wireless access point;
or, acquiring the uplink message forwarded by the wireless access point at which the neighbor area detection apparatus is located, extracting the identification information of the client from the uplink message, and acquiring the identification information of the wireless access point.

In an exemplary embodiment, the identification information of the client is a medium access control address of the client, and/or the identification information of the wireless access point is the medium access control address of the wireless access point.

In an exemplary embodiment, the time difference threshold is set based on one or more of the following parameters: a distance between wireless access points, a wireless signal transmission rate and a network latency.

An embodiment of the present invention further provides a neighbor area detection apparatus, including: a message acquiring module, a processing module, and a neighbor area configuring module.

The message acquiring module is configured to acquire a detection message and record time of acquiring the detection message, herein the detection message includes identification information of a client in an uplink message sent by the client through a wireless access point and identification information of the wireless access point.

The processing module is configured to, when the detection message acquired in the message acquiring module includes a plurality of messages, judge whether there are detection messages with different identification information of wireless access points but same identification information of clients and time difference of acquiring the detection message is less than a preset time difference threshold; if yes, notify the neighbor area configuring module.

The neighbor area configuring module is configured to configure areas covered by the wireless access points in the detection messages to be neighbor areas after receiving the notification.

In an exemplary embodiment, the message acquiring module of the neighbor area detection apparatus connects with a plurality of wireless access points;
the message acquiring module includes a first identification information acquiring sub-module, configured to acquire identification information of the client, which is extracted from the uplink message and sent by a wireless access point connected with the neighbor area detection apparatus, and acquire identification information of the wireless access point;
or, the message acquiring module includes a second identification information acquiring sub-module, configured to acquire the uplink message forwarded by the wireless access point connected with the neighbor area detection apparatus, extract identification information of the client from the uplink message, and acquire identification information of the wireless access point.

In an exemplary embodiment, the neighbor area detection apparatus is arranged at a wireless access point, and the message acquiring module includes a first message acquiring module and a second message acquiring module identification. The first message acquiring module is configured to acquire a detection message of the wireless access point at which the neighbor area detection apparatus is located and send to a neighbor area detection apparatus at other wireless access point, and the second message acquiring module is configured to receive a detection message sent by a neighbor area detection apparatus at other wireless access point.

The first message acquiring module includes a third identification information acquiring sub-module, configured to acquire identification information of the client, which is extracted from the uplink message and sent by the wireless access point at which the neighbor area detection apparatus located, and acquire identification information of the wireless access point.

Or, the first message acquiring module includes a forth identification information acquiring sub-module, configured to acquire the uplink message forwarded by the wireless access point at which the neighbor area detection apparatus located, extract identification information of the client from the uplink message, and acquire identification information of the wireless access point.

In an exemplary embodiment, the identification information of the client is a medium access control address of the client, and/or the identification information of the wireless access point is a medium access control address of the wireless access point.

An embodiment of the present invention further provides a communication device, including the abovementioned neighbor area detection apparatus.

An embodiment of the present invention further provides a computer readable storage medium, where program instructions are stored, and when the program instructions are executed, the abovementioned method can be implemented.

According to a neighbor area detection method, apparatus and communication device provided by the document, a detection message is acquired and time of acquiring the detection message is recorded by a neighbor area detection apparatus, herein the acquired detection message includes identification information of a client in an uplink message sent by the client through a wireless access point, and identification information of the wireless access point; and then when the acquired detection message includes a plurality of messages, whether there are detection messages with different identification information of wireless access points but same identification information of clients and time difference of acquiring the detection messages is less than a preset time difference threshold; if yes, areas covered by wireless access points in the detection messages are configured to be neighbor areas. That is, when two wireless access points detect signals from the same client and the detected time difference is less than a preset time difference threshold, areas covered by the two wireless access points may be configured to be neighbor areas to each other, which implements accurate and effective detection for indirect neighbor areas, and facilitates reduction of the probability of collision.

### Brief Description of Drawings

FIG. 1 is a flowchart of a neighbor area detection method provided by embodiment one of the present invention.
FIG. 2 is a structural schematic diagram of a centralized detection system provided by embodiment one of the present invention.
FIG. 3 is a structural schematic diagram of a distributed detection system provided by embodiment one of the present invention.
FIG. 4 is a structural schematic diagram of a neighbor area detection apparatus provided by embodiment two of the present document.
FIG. 5 is a structural schematic diagram of a centralized detection system provided by embodiment three of the present invention.
FIG. 6 is a flowchart of a centralized detection provided by embodiment three of the present invention.
FIG. 7 is a structural schematic diagram of a distributed detection system provided by embodiment four of the present invention.
FIG. 8 is a flowchart of a distributed detection provided by embodiment four of the present invention.

### Detailed Description

The present application is described in detail through the embodiments in combination with the accompanying drawings hereinafter.

### Embodiment one

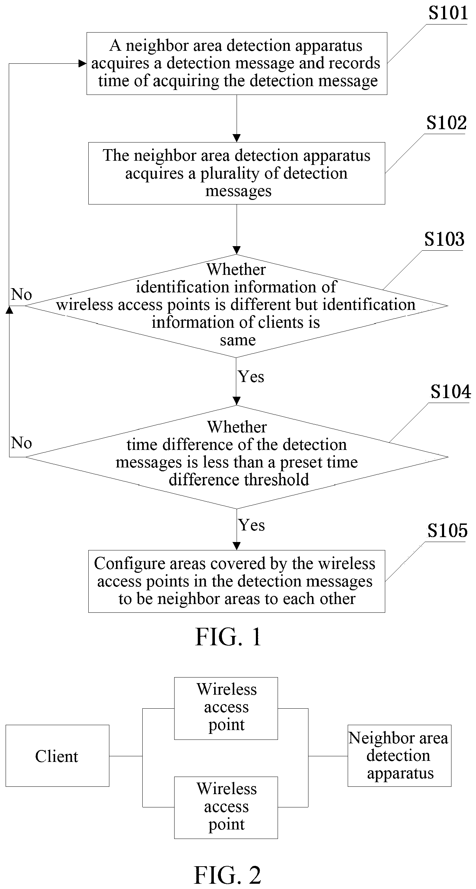

With reference to FIG. 1, a neighbor area detection method provided by the embodiment of the present invention includes the following steps 101-105.

In step 101, a neighbor area detection apparatus acquires a detection message and records time of acquiring the detection message.

The detection message acquired by the neighbor area detection apparatus includes identification information of a client (STA) in an uplink message sent by a wireless access point (AP) and identification information of the wireless AP.

In step 102, the neighbor area detection apparatus acquires a plurality of detection messages; and the plurality of detection messages here are two or more detection messages.

In step 103, it is judged whether there are detection messages with different identification information of wireless access points but same identification information of clients; if yes, the step turns to step 104; if no, the step turns to step 101.

In step 104, it is judged whether the time difference of acquiring the detection messages is less than a preset time difference threshold; if yes, the step turns to step 105; if no, the step turns to step 101.

The detection messages described in the present step refers to detection messages that satisfy the condition of step 103.

In step 105, areas covered by the wireless access point in the detection messages are configured to be neighbor areas to each other.

The detection messages described in the present step refers to detection messages that satisfy the conditions of step 103 and step 104.

Based on the above scheme, when two (or three, or more) wireless access points detect signals of the same client and the detected time difference is less than the preset time difference threshold, the areas covered by the two wireless access points are configured to be neighbor areas to each other, which implements accurate and effective detection for the indirect neighbor area, and facilitates reduction of the probability of collision.

It should be understood that, the above steps 103 and 104 do not have a strict timing sequence restriction. Whether there are detection messages with the different identification information of the wireless access points but same identification information of the clients may be judged at first; if yes, and then whether the time difference of acquiring the detection messages is less than a preset time difference threshold is judged. Or, whether there are detection messages of which acquiring time difference is less than the preset time difference threshold may also be judged at first; if yes, then whether the identification information of the wireless access points of the detection messages are different and the identification information of the clients are same; that is, the above-described step 104 may also be implemented at first, and then the above-described step 103 may be implemented.

The time difference threshold in the above step 104 may be set based on one or more of the following parameters: a distance between the wireless access points, a wireless signal transmission rate, and a network latency, of which main function is to avoid false detection. The specific example is as follows.

The covered areas of the first wireless access point and the second wireless access point have no overlapping area at all; when the client sends a first uplink message inside the covered area of the first wireless access point and outside the covered area of the second wireless access point, the first wireless access point can correctly receive the first uplink message and the second wireless access point cannot correctly receive the first uplink message. After a period of time, the client moves into the covered area of the second wireless access point, sends a second uplink message inside the covered area of the second wireless access point and outside the covered area of the first wireless access point, at this time, at the moment the first wireless access point cannot correctly receive the second uplink message and the second wireless access point can correctly receive the second uplink message. At the moment, if the time difference threshold is not set, the neighbor area detection apparatus will set the covered areas of the first wireless access point and the second wireless access point to be the neighbor areas, but in fact, the areas covered by the first wireless access point and the second wireless access point are not a neighbor area relationship. Therefore, to prevent the above-mentioned erroneous neighbor area configuration due to the moving of the client, the time threshold is set to ensure that the uplink messages received by the first wireless access point and the second wireless access point are the same uplink message sent by the client.

It should be understood that the above-described neighbor area detection process in the present embodiment may be executed within a set detection period, and the detection process is automatically ended when the detection period is reached.

In the present embodiment, the neighbor area detection may be performed in both ways, i.e., the centralized detection and the distributed detection, and description is made below in two ways.

### Centralized detection

Referring to FIG. 2, the neighbor detection apparatus is connected with a plurality of wireless access points, and the client is connected with wireless access points. The neighbor area detection apparatus in FIG. 2 may be a physical device independent of the wireless access point, such as a router, a switch, or an access controller (AC) or other communication devices; the neighbor area detection apparatus may connect with a wireless access point by means of an optical fiber, Ethernet or other manners. At this time, the neighbor area detection apparatus acquires the detection messages in any of the following ways.

First way: after receiving the uplink information sent by the client, the wireless access point extracts the identification information of the client sending the uplink information from the uplink information, and sends the identification information to the neighbor area detection apparatus; the neighbor area detection apparatus receives the identification information of the client sent by the wireless access point and acquires the identification information of the wireless access point; at the same time, records the time of acquiring the identification information of the client, or the time of acquiring the identification information of the wireless access point; and takes the time as the time of acquiring the detection message.

Second way: after receiving the uplink information sent by the client, the wireless access point sends the uplink information to the neighbor area detection apparatus; the neighbor area detection apparatus receives the uplink information and extracts the identification information of the client sending the uplink information, and acquires the identification information of the wireless access point which forwards the uplink information; at the same time, records the time of acquiring the identification information of the client, or the time of acquiring the identification information of the wireless access point; and takes the time as the time of acquiring the detection message.

### Distributed detection

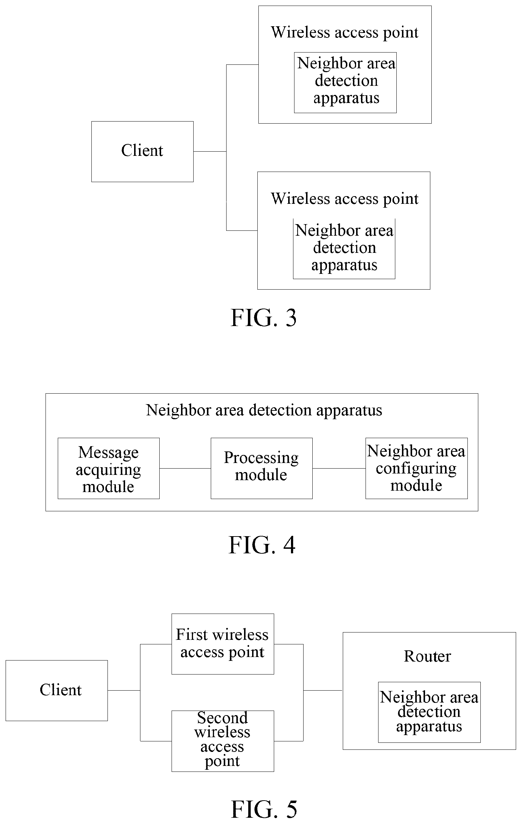

Referring to FIG. 3, the neighborhood detection apparatus is arranged at the wireless access point, and each wireless access point is provided with one neighbor detection apparatus, and a plurality of wireless access points may also be connected by means of Ethernet. At this time, the neighbor area detection apparatus acquiring the detection message includes: acquiring a detection message of the wireless access point at which the neighbor area detection apparatus is located, and sending to the neighbor area detection apparatus at other wireless access points, and receiving the detection message sent by the neighbor area detection apparatuses at other wireless access points.

Herein, the neighbor area detection apparatus acquiring a detection message of the wireless access point at which the neighbor area detection apparatus is located may also use any one of the following two ways:
First way: after receiving the uplink information sent by the client, the wireless access point extracts the identification information of the client sending the uplink information from the uplink information and sends the identification information to the neighbor area detection apparatus which is arranged at the wireless access point; the neighbor area detection apparatus receives the identification information of the client and acquires the identification information of the wireless access point; at the same time, records the time of acquiring the identification information of the client, or the time of acquiring the identification information of the wireless access point; and takes the time as the time of acquiring the detection message.
Second way: after receiving the uplink information sent by the client, the wireless access point sends the uplink information to the neighbor area detection apparatus which is arranged at the wireless access point; the neighbor area detection apparatus receives the uplink information and extracts the identification information of the client sending the uplink information, and acquires the identification information of the wireless access point which forwards the uplink information; at the same time, records the time of acquiring the identification information of the client, or the time of acquiring the identification information of the wireless access point; and takes the time as the time of acquiring the detection message.

The identification information of the client acquired in the present embodiment may be a medium access control address of the client, and/or the acquired identification information of the wireless access point may also be the medium access control address of wireless access point. It should be understood that the identification information in the present embodiment is not limited to the medium access control address, and any other identification information that can uniquely identify the client and the wireless access point and can be extracted is suitable.

When the uplink message sent by the client arrives at the receiving antenna of the wireless access point, power of the uplink message should be higher than the first threshold, and only when the power is higher than the first threshold, the wireless access point can correctly demodulate the uplink message. Here, the first threshold is the power strength of a wireless frame of 802.11 protocol which can be correctly demodulated by the wireless access point, and typically, it is -85dbm. Therefore, after the wireless access point in the present embodiment receives the uplink information sent by the client, and before extracting the identification information of the client or before forwarding the uplink information to the neighbor area detection apparatus, the wireless access point judges that whether the signal power strength of the uplink information is greater than the first threshold; if no, the wireless access point discards the uplink message; if it is greater than the first threshold, then extracts the identification information from the client, or forwards the uplink information to the neighbor area detection apparatus.

### Embodiment two

Referring to FIG. 4, the neighbor area detection apparatus in the present embodiment includes a message acquiring module, a processing module, and a neighbor area configuring module.

The message acquiring module is configured to acquire a detection message and record time of acquiring the detection message, herein the detection message in the present embodiment includes identification information of a client in an uplink message sent by the client through a wireless access point, and identification information of the wireless access point.

The processing module is configured to, when the detection message acquired in the message acquiring module includes a plurality of detection messages, judge whether there are detection messages with different identification information of wireless access points but same identification information of clients and time difference of acquiring the detection messages is less than a preset time difference threshold; if yes, notify the neighbor area configuring module.

The neighbor area configuring module is configured to configure the areas covered by the wireless access points in the detection messages to be neighbor areas after receiving the notification.

The processing module in the present embodiment may judge whether there are detection messages with the different identification information of wireless access points but same identification information of clients at first; if yes, and then may judge whether the time difference of acquiring the detection message is less than a preset time difference threshold. Or, the processing module may also judge whether there are detection messages of which an acquiring time difference is less than the preset time difference threshold at first; if yes, then may judge whether the identification information of wireless access points of the detection messages is different and the identification information of clients are same. Herein, the time difference threshold may be set based on one or more of the following parameters: a distance between the wireless access points, the wireless signal transmission rate, and the network latency, of which main function is to prevent the wrong neighbor area configuration due to moving of the client in multiple areas of non-overlapping areas, and to ensure that the uplink messages received by the multiple wireless access points is same uplink message sent by the client.

In the present embodiment, the neighbor area detection may be performed in both ways, i.e., the centralized detection and the distributed detection. For the centralized detection, the neighbor detection apparatus is connected with a plurality of wireless access points, and the client is connected with the wireless access points. The neighbor area detection apparatus may be a physical device independent of the wireless access points, such as a router, a switch, or an access controller (AC) or other a communication device. The neighbor area detection apparatus may connect with a wireless access point by means of an optical fiber, Ethernet or other manners. At this time, the neighbor area detection apparatus acquires a detection message in any of the following ways:
First way: the message acquiring module includes a first identification information acquiring sub-module, configured to acquire identification information of the client, which is extracted from the uplink message and sent by the wireless access point connected with the neighbor area detection apparatus, and acquire identification information of the wireless access point; at the same time, record time of acquiring the identification information of the client, or time of acquiring the identification information of the wireless access point; and takes the time as the time of acquiring the detection message.
Second way: the message acquiring module includes a second identification information acquiring sub-module, configured to acquire the uplink message forwarded by the wireless access point connected with the neighbor area detection apparatus, and extract the identification information of the client from the uplink message, and acquire the identification information of the wireless access point; at the same time, record time of acquiring the identification information of the client, or time of acquiring the identification information of the wireless access point; and takes the time as the time of acquiring the detection message.

For the distributed detection, the neighborhood detection apparatus is arranged at a wireless access point, and one neighbor detection apparatus is provided with each wireless access point, and a plurality of wireless access points may also be connected by means of Ethernet or the like. At this time, the message acquiring module of the neighbor area detection apparatus includes a first message acquiring module and a second message acquiring module. The first message acquiring module is configured to acquire a detection message of the wireless access point at which the neighbor area detection apparatus is located, and send to the neighbor area detection apparatus at other wireless access point. The second message acquiring module is configured to receive a detection message sent by the neighbor area detection apparatus at other wireless access points. In an exemplary embodiment, the first message acquiring module is configured to acquire a detection message of the wireless access point where the neighbor area detection apparatus is located may use any one of the followings:
First way: the first message acquiring module includes a third identification information acquiring sub-module, configured to acquire identification information of the client, which is extracted from the uplink message and sent by the wireless access point at which the neighbor area detection apparatus located, and acquire identification information of the wireless access point.
Second way: the first message acquiring module includes a forth identification information acquiring sub-module, configured to acquire the uplink message forwarded by the wireless access point at which the neighbor area detection apparatus located, extract identification information of the client from the uplink message, and acquire identification information of the wireless access point.

The identification information of the client acquired in the present embodiment may be a medium access control address of the client, and/or the acquired identification information of the wireless access point may also be a medium access control address of wireless access point. It should be understood that the identification information in the present embodiment is not limited to the medium access control address, and any other identification information that can uniquely identify the client and the wireless access point and can be extracted is suitable.

When the uplink message sent by the client arrives at the receiving antenna of the wireless access point, the power should be higher than the first threshold, and only if the power is higher than the first threshold, the wireless access point can correctly demodulate the uplink message. Here, the first threshold is the power strength of a wireless frame of 802.11 protocol which can be correctly demodulated by the wireless access point, typically, it is -85dbm. Therefore, after the wireless access point in the present embodiment receives the uplink information sent by the client, and before extracting the identification information of the client or before forwarding the uplink information to the neighbor area detection apparatus, the wireless access point judges that whether the signal power strength of the uplink information is greater than the first threshold; if no, the wireless access point discards the uplink message; if it is greater than the first threshold, then extracts the identification information from the client, or forwards the uplink information to the neighbor area detection apparatus.

The present embodiment also provides a communication device including a neighbor area detection apparatus as described above, which may be a communication device, such as a router, a switch or an access controller or the like, and may also be a wireless access point itself. The wireless access point in the present embodiment may be a communication terminal such as a base station or a mobile phone or the like.

### Embodiment three

Description below is made by taking a centralized detection example as an example.

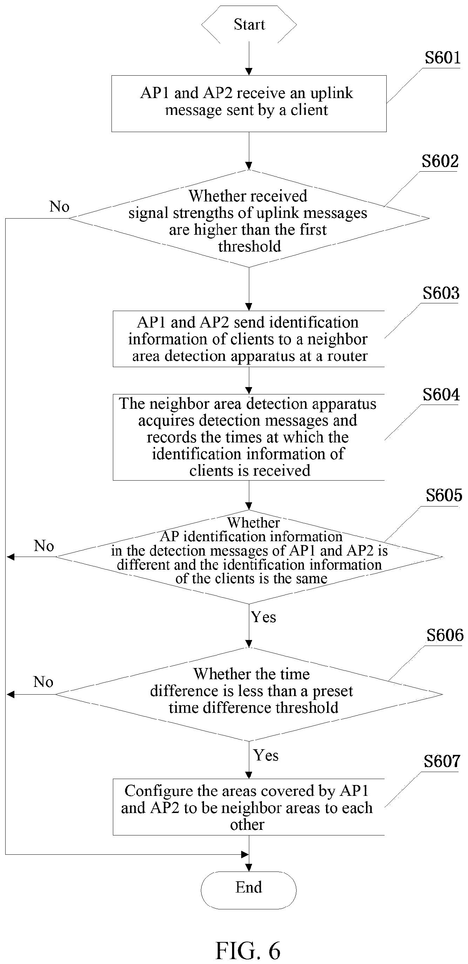

Referring to FIG 5, a centralized detection system shown in the figure includes a client (STA), a first wireless access point (AP1), a second wireless access point (AP2), and a router. Herein, the router is provided with a neighbor area detection apparatus. AP1 and AP2 are connected with the router. Based on the centralized detection system, the neighbor area detection process is seen in FIG. 6, including the following steps 601-607.

In step 601, AP1 and AP2 receive an uplink message sent by the client.

In step 602, AP1 and AP2 judge whether the received signal strength of the received uplink message is higher than the first threshold; if yes, the step turns to step 603; and if no, the step ends.

In step 603, AP1 and AP2 send the identification information of the client in the uplink message to the neighbor area detection apparatus at the router.

The identification information of the client generally selects to use the MAC address of the client.

In step 604, the neighbor area detection apparatus receives the identification information of the client sent by AP1 and AP2, records the received identification information of the client, and correspondingly records the identification information of AP1 and AP2 and acquires the detection message, and records the time when the identification information of the client is received.

The identification information of AP is generally the MAC address of the AP.

In step 605, the neighbor area detection apparatus judges whether the AP identification information in the detection messages of AP1 and AP2 is different and the identification information of the clients is the same; if yes, the step turns to step 606; if no, the step ends.

In step 606, the neighbor area detection apparatus calculates whether the time difference between the time at which the identification information of the client sent by the AP1 is received and the time at which the identification information of the client sent by the AP2 is received is less than the time difference threshold; if yes, the step 607 is executed; and if no, the step ends.

In step 607, the areas covered by AP1 and AP2 are configured to be neighbor areas to each other.

The exemplary illustration is made below by taking an application scenario as an example.

When the STA with the MAC address MAC_sta expects to scan the WLAN network in an area where the STA is located, the STA will monitor the Beacon frame sent by the AP on the one hand, and the STA will send the broadcast message Probe Request on the other hand.

The Probe Request message sent by the STA is received by AP1 and AP2. The received powers of the Probe Request message sent by the STA at the receiving antennas of AP1 and AP2 are both higher than the power -85dBm required by correctly demodulating the message.

The distance from AP1 to the STA is 1000 meters, and the distance from AP2 to the STA is 2000 meters. Since the propagation speed of the wireless wave in the air is 300000000 m/s, the time required for the Probe Request sent by the STA to reach AP1 is 3.33s, and the time required for the Probe Request to reach AP2 is 6.66us.

In the present embodiment, the distance between AP1 and AP2 is 3000 meters at most, so the time difference of the uplink message of the STA arrives at the two APs is 10us at most. The neighbor area detection apparatus (i.e. router) and AP1 and AP2 are connected via Ethernet. When 100M Ethernet is used, the minimum frame 64bytes is required to be transmitted for 5us, and the switch latency is generally 6-11us. In general, the time interval of STA sending Probe Request is 10ms or more. In conclusion, the time difference threshold may be set to 1ms.

For AP1, AP1 sends the MAC address MAC_sta of the STA to the neighbor area detection apparatus when receiving the Probe Request message sent by the STA and demodulates it correctly. For AP2, AP2 sends the MAC address MAC_sta of the STA to the neighbor area detection apparatus when receiving the Probe Request message sent by STA and demodulates it correctly.

Since AP1 receives the Probe request sent by STA before AP2, therefore, AP1 sends the MAC address of STA to neighbor area detection apparatus before AP2.

When the neighbor area detection apparatus receives the MAC address of the STA sent by the AP1, there is no message from another AP, i.e., AP2, therefore, the neighbor area detection apparatus does not configure any neighbor area for the covered area of the AP1.

When the neighbor area detection apparatus receives the MAC address of the STA sent by the AP2, taking into account for the transmission latency and the switching latency of the 100M Ethernet, the difference between the time at which the neighbor area detection apparatus receives the AP2 report and the time at which the neighbor area detection apparatus receives the AP1 report, will not exceed the time difference threshold 1ms, and both the APs report the same identification of STA. Therefore, the neighbor area detection apparatus configures the AP1 covered area and the AP2 covered area to be neighbor areas to each other.

### Embodiment four

The illustration is made below by taking a distributed detection example as an example.

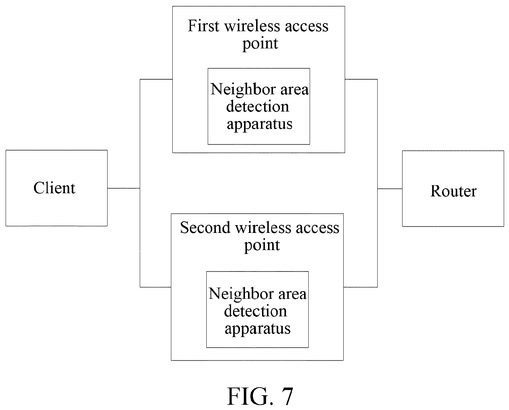

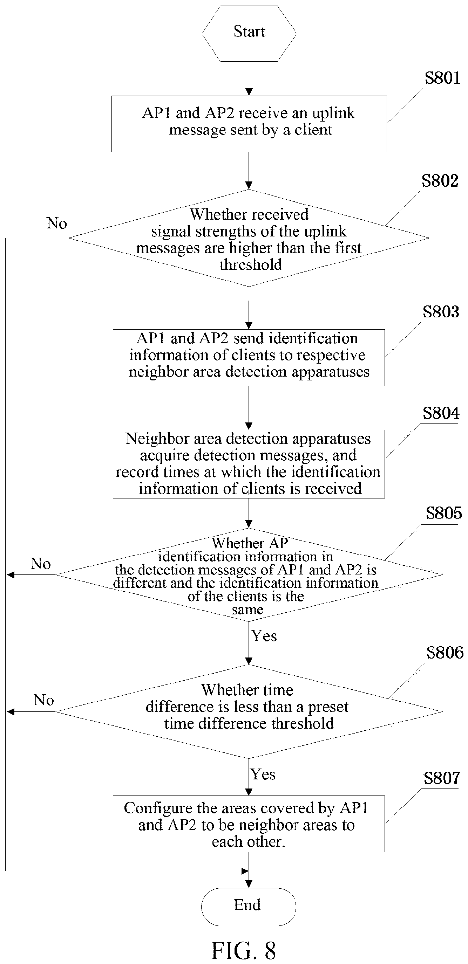

Referring to FIG. 7, the distributed detection system shown in the figure includes a client (STA), a first wireless access point (AP1), a second wireless access point (AP2), and a router. Herein, the AP1 and AP2 are both provided with a neighbor area detection apparatuses. AP1 and AP2 connect through the 100M Ethernet; and AP1 and AP2 are connected with the router. Based on the distributed detection system, the neighbor area detection process is seen in FIG. 8, including the following steps.

In step 801, AP1 and AP2 receive an uplink message sent by the client.

In step 802, AP1 and AP2 judge whether the received signal strength of the received uplink message is higher than a first threshold; if yes, the step turns to step 803; and if no, the step ends.

In step 803, AP1 and AP2 respectively send the received identification information of the client in the uplink message to the neighbor area detection apparatuses at AP1 and AP2 themselves.

Herein, the identification information of the client generally selects to use the MAC address of the client.

In step 804, the neighbor area detection apparatus at AP1 receives the identification information of the client sent by AP1, records the received identification information of the client, and correspondingly records the identification information of AP1 and acquires a detection message, and records the time at which the identification information of the client is received; the neighbor area detection apparatus at AP2 receives the identification information of the client sent by AP2, records the received identification information of the client, and correspondingly records the identification information of AP2 and acquires a detection message, and records the time at which the identification information of the client is received.

The identification information of AP is generally the MAC address of the AP.

In step 805, the neighbor area detection apparatus at AP1 judges whether the AP identification information in the detection messages of AP1 and AP2 is different and the identification information of the clients is the same; if yes, the step turns to step 806; and if no, the step ends.

In step 806, the neighbor area detection apparatus at AP1 calculates whether the time difference between the time at which the identification information of the client sent by the AP1 is received and the time at which the identification information sent by the AP2 is received is less than the time difference threshold; if yes, the step 807 is executed; and if no, the step ends.

In step 807, the neighbor area detection apparatus at AP1 configures the areas covered by AP1 and AP2 to be neighbor areas to each other.

In the present embodiment, the neighbor area detection apparatus at the AP2 may also perform a judging process similar to the above-described step 805 to step 807. Of course, after the neighbor area detection apparatus at AP1 completes the above-described step 805 to step 807 and configures the areas covered by AP1 and AP2 to be neighbor areas to each other, the neighbor area detection apparatus at AP1 may directly notify the AP2 of the neighbor area configuration message; after the neighbor area detection apparatus at AP2 receives the neighbor area configuration message, the judgment which is similar to step 805 to step 807 will not be performed, just adding the area covered by AP1 directly to the neighbor list.

The exemplary illustration is made below by taking an application scenario as an example.

When the STA with the MAC address MAC_sta expects to scan the WLAN network in an area where the STA is located, the STA will monitor the Beacon frame sent by the AP on the one hand, the STA will send the broadcast message Probe Request on the other hand.

The Probe Request message sent by the STA is received by AP1 and AP2. The received powers of the Probe Request message sent by the STA at the receiving antennas of AP1 and AP2 are both higher than the power -85dBm required by correctly demodulating the message.

The distance from AP1 to the STA is 1000 meters, and the distance from AP2 to the STA is 2000 meters. Since the propagation speed of the wireless wave in the air is 300000000 m/s, the time required for the Probe Request sent by the STA to reach AP1 is 3.33s, and the time required for the Probe Request to reach AP2 is 6.66us.

In the present embodiment, the distance between AP1 and AP2 is 3000 meters at most, so the time difference of the uplink message of the STA arrives at the two APs is 10us at most. AP1 and AP2 are connected via Ethernet, and when 100M Ethernet is used, the minimum frame 64bytes is required to be transmitted for 5us, and the switch latency is generally 6-11us. In general, the time interval of STA sending Probe Request is 10ms or more. In conclusion, the time difference threshold may set to 1ms.

For AP1, when receiving a Probe Request message sent by the STA and demodulates the Probe Request message correctly, AP1 sends the MAC address MAC_sta of the STA to the neighbor area detection apparatus of the present AP, and also sends to the neighbor area detection apparatus of AP2 at the same time. For AP2, when receiving a Probe Request message sent by STA and demodulates the Probe Request message correctly, AP2 sends the MAC address MAC_sta of the STA to the neighbor area detection apparatus of the present AP, and also sends to the neighbor area detection apparatus of AP1 at the same time.

When the neighbor area detection apparatus of AP1 receives the MAC address of the STA sent by the AP1, and there is no MAC address of the STA reported by other AP, that is AP2, at this time, the neighbor area detection apparatus of AP1 does not configure any neighbor area for the covered area of the AP1.

Since AP2 receives the Probe Request message of STA at 3.33us later than AP1, plus the transmission latency and switch latency (approximately 11-16us) of the 100M Ethernet, the time at which the neighbor area detection apparatus of AP1 receives the MAC address of STA reported by AP2 is later than the time at which AP1 reports the MAC address of STA to the neighbor area detection apparatus of itself, which is about 20us and less than the time difference threshold, therefore, the neighbor area detection apparatus of AP1 configures the covered areas of AP1 and AP2 to be the neighbor areas to each other.

AP1 sends the report of the MAC address of the STA to the neighbor area detection apparatus of AP2 via Ethernet, taking into account the transmission latency and switch latency (approximately 11-16us) of the 100M Ethernet, and the AP2 receives the Probe Request sent by STA at 3.33us later than AP1, therefore, the time at which the neighbor area detection apparatus of AP2 receives the report of the MAC address of the STA sent by the AP2 should be earlier than the time at which the neighbor area detection apparatus of AP2 receives the report sent by the AP1, which is about 10us and less than the time difference threshold, therefore, the neighbor area detection apparatus of AP2 configures the covered areas of AP1 and AP2 to be the neighbor areas to each other.

Those ordinarily skilled in the art can understand that all or some of steps of the abovementioned method may be completed by the programs instructing the relevant hardware, and the programs may be stored in a computer-readable storage medium, such as read only memory, magnetic or optical disk. In an exemplary embodiment, all or some of the steps of the abovementioned embodiments may also be implemented by using one or more integrated circuits. Accordingly, each module/unit in the abovementioned embodiments may be realized in a form of hardware, or in a form of software function modules.

### Industrial Applicability

In the present application, when two wireless access points detect signals from the same client and the detected time difference is less than the preset time difference threshold, the areas covered by the two wireless access points may be configured to be neighbor areas to each other, which implements accurate and effective detection for the indirect neighbor area, and facilitates reduction of the probability of collision.

## Claims

1. A neighbor area detection method, comprising:
a neighbor area detection apparatus acquiring a detection message and recording time of acquiring the detection message, wherein the detection message comprises identification information of a client in an uplink message sent by the client through a wireless access point and identification information of the wireless access point;
when acquired detection message includes a plurality of messages, the neighbor area detection apparatus judging whether there are detection messages with different identification information of wireless access points but same identification information of clients and time difference of acquiring the detection messages is less than a preset time difference threshold; if yes, configuring areas covered by the wireless access points in the detection messages to be neighbor areas.

2. The neighbor area detection method according to claim 1, wherein, the neighbor area detection apparatus is configured to connect with a plurality of wireless access points; and the neighbor area detection apparatus acquiring a detection message comprises:
acquiring identification information of the client, which is extracted from the uplink message and sent by a wireless access point connected with the neighbor area detection apparatus, and acquiring identification information of the wireless access point;
or, acquiring the uplink message forwarded by a wireless access point connected with the neighbor area detection apparatus, extracting the identification information of the client from the uplink message, and acquiring the identification information of the wireless access point.

3. The neighbor area detection method according to claim 1, wherein, the neighbor area detection apparatus is arranged at a wireless access point, and the neighbor area detection apparatus acquiring a detection message comprises: acquiring a detection message of the wireless access point at which the neighbor area detection apparatus is located and sending the detection message to a neighbor area detection apparatus at other wireless access point, and receiving a detection message sent by a neighbor area detection apparatus at other wireless access point;
the acquiring a detection message of the wireless access point at which the neighbor area detection apparatus is located comprises:
acquiring identification information of the client, which is extracted from the uplink message and sent by the wireless access point at which the neighbor area detection apparatus is located, and acquiring the identification information of the wireless access point;
or, acquiring the uplink message forwarded by the wireless access point at which the neighbor area detection apparatus is located, extracting the identification information of the client from the uplink message, and acquiring the identification information of the wireless access point.

4. The neighbor area detection method according to any one of claims 1 to 3, wherein, the identification information of the client is a medium access control address of the client, and/or the identification information of the wireless access point is a medium access control address of the wireless access point.

5. The neighbor area detection method according to any one of claims 1 to 3, wherein, the time difference threshold is set based on one or more of the following parameters: a distance between wireless access points, a transmission rate of a wireless signal, and a network latency.

6. A neighbor area detection apparatus, comprising: a message acquiring module, a processing module, and a neighbor area configuring module, wherein:
the message acquiring module is configured to acquire a detection message and record time of acquiring the detection message, wherein the detection message comprises identification information of a client in an uplink message sent by the client through a wireless access point, and identification information of the wireless access point;
the processing module is configured to, when the detection message acquired in the message acquiring module comprises a plurality of messages, judge whether there are detection messages with different identification information of wireless access points but same identification information of clients and time difference of acquiring the detection message is less than a preset time difference threshold; if yes, notify the neighbor area configuring module;
the neighbor area configuring module is configured to configure areas covered by the wireless access points in the detection messages to be neighbor areas after receiving the notification.

7. The neighbor area detection apparatus according to claim 6, wherein, the message acquiring module of the neighbor area detection apparatus is configured to connect with a plurality of wireless access points;
the message acquiring module comprises a first identification information acquiring sub-module, configured to acquire identification information of the client, which is extracted from the uplink message and sent by a wireless access point connected with the neighbor area detection apparatus, and acquire identification information of the wireless access point;
or, the message acquiring module comprises a second identification information acquiring sub-module, configured to acquire the uplink message forwarded by a wireless access point connected with the neighbor area detection apparatus, extract identification information of the client from the uplink message, and acquire identification information of the wireless access point.

8. The neighbor area detection apparatus according to claim 6, wherein, the neighbor area detection apparatus is arranged at a wireless access point, and the message acquiring module comprises a first message acquiring module and a second message acquiring module, wherein: the first message acquiring module is configured to acquire a detection message of the wireless access point at which the neighbor area detection apparatus is located and send to a neighbor area detection apparatus at other wireless access point, and the second message acquiring module is configured to receive a detection message sent by a neighbor area detection apparatus at other wireless access point;
the first message acquiring module comprises a third identification information acquiring sub-module, configured to acquire identification information of the client, which is extracted from the uplink message and sent by the wireless access point at which the neighbor area detection apparatus located, and acquire identification information of the wireless access point;
or, the first message acquiring module comprises a forth identification information acquiring sub-module, configured to acquire the uplink message forwarded by the wireless access point at which the neighbor area detection apparatus located, extract identification information of the client from the uplink message, and acquire identification information of the wireless access point.

9. The neighbor area detection apparatus according to any one of claims 6 to 8, wherein, the identification information of the client is a medium access control address of the client, and/or the identification information of the wireless access point is a medium access control address of the wireless access point.

10. A communication device, comprising the neighbor area detection apparatus according to any one of claims 6-9.

11. A computer readable storage medium where program instructions are stored, wherein, when the program instructions are executed, the method of any one of claims 1-5 can be implemented.
